# EUROPEAN PATENT APPLICATION

(11) **EP 4 496 147 A1**
(43) Date of publication of application: **22.01.2025**
(21) Application number: 23769763.6
(22) Date of filing: 14.03.2023
(51) Int. Cl.: H01R 31/06, H01B 7/40, B60L 53/16

(54) **NEW FLAME-RETARDANT SHIELDING CONNECTOR ASSEMBLY, AND VEHICLE**

(30) Priority: 14.03.2022 CN 202210250057
(71) Applicant: Jilin Zhong Ying High Technology Co., Ltd., Jilin 130028 (CN)
(72) Inventor: WANG, Chao, Changchun, Jilin 130028 (CN)
(74) Representative: Habermann, Hruschka & Schnabel
(86) International application number: PCT/CN2023/081325
(87) International publication number: WO 2023/174261

(57) **Abstract**

The present disclosure discloses a new shielded flame-retardant connector assembly, and a vehicle, and relates to the technical field of automotive electrical appliances. The connector assembly includes an electrical connection skeleton, and connectors connected to two ends of the electrical connection skeleton, in which each of the connectors includes a connecting terminal, and an inner shell which has a shielding effect, the two ends of the electrical connection skeleton are electrically connected to connection terminals respectively, an outer periphery of the electrical connection skeleton is coated, from inside to outside, with an insulating layer and a conductive layer, the conductive layer is electrically connected to the inner shell, and at least one of the inner shell, the insulating layer and the conductive layer includes a flame retardant. In the present disclosure, the electrical connection skeleton is used to replace a multi-core copper cable, a diameter and a weight of a cable are reduced, the cable may be mounted easily, and the friction between the cable and a vehicle shell is reduced, thus prolonging a service life of a connector, and the flame-retardant performance is good.

## Description

### CROSS-REFERENCE TO RELATED APPLICATION

The present disclosure claims the priority of the Chinese Patent Application NO. 202210250057.1, filed on March 14, 2022, and entitled " NEW SHIELDED FLAME-RETARDANT CONNECTOR ASSEMBLY, AND VEHICLE", the entire content of which is incorporated herein by reference.

### TECHNICAL FIELD

The present disclosure relates to the technical field of automotive electrical appliances, more specifically, relates to a new shielded flame-retardant connector assembly, and a vehicle.

### BACKGROUND

With the increasing popularity of new energy vehicles, charging equipment and facilities for the new energy vehicles have also developed. Because connector assembly on the new energy vehicle needs to meet a requirement of driving high-power motors, the transmission current is relatively high, and diameters of high-voltage cable on the connector assembly also increases. At present, for high-voltage cables on most connector assemblies, a multi-core copper cable is used, it is large in weight and expensive in price, becoming an obstacle to popularization of the new energy vehicles. In addition, although a multi-core cable is soft and can be easily processed and wired, due to its coarse diameter and significant weight, the cable may frequently rub against a vehicle shell during vehicle driving, causing a damage to an insulating layer of the cable, and resulting in high-voltage discharge, the vehicle is damaged in a mild circumstance, and a serious traffic accident may occur in a severe circumstance.

Moreover, for a current connector, its flame retardancy is not high, when a cable or terminal starts to heat up due to a too high conducting current, the connector may melt, smoke and burn, etc., which cannot ensure the use of a connector assembly and even endanger the safety of a vehicle.

In order to reduce the influence of electromagnetic interference, a conductive cable is usually shielded from the electromagnetic interference by using a shielding net. At present, a commonly used shielding net is made by braiding a metal wire, and it is necessary to increase a shielding braiding machine in cable production equipments, the equipment price is high and the occupied area is large, causing a price of a shielding cable of a connector to stay at a high level.

Therefore, the technical field of automotive electrical appliances urgently needs a connector cable with a low price, a long service life and good flame retardance.

### SUMMARY OF INVENTION

The purpose of the present disclosure is to use an electrical connection skeleton to replace a multi-core copper cable, to reduce a diameter of a cable and reduce a weight of the cable so that the cable may be mounted easily, to reduce the friction between the cable and a vehicle shell, thus prolonging a service life of a connector assembly; and at least one of an inner shell, an outer shell of the connector and an insulating layer and a conductive layer of the electrical connection skeleton includes a flame retardant, which ensures the flame retardant performance of a new shielded flame-retardant connector assembly.

According to a first aspect of the present disclosure, a new shielded flame-retardant connector assembly is provided and comprises an electrical connection skeleton, and connectors connected to two ends of the electrical connection skeleton, each of the connectors includes a connection terminal, and an inner shell which has a shielding effect, the two ends of the electrical connection skeleton are electrically connected to the connection terminals respectively, an outer periphery of the electrical connection skeleton is coated, from inside to outside, with an insulating layer and a conductive layer, the conductive layer is electrically connected to the inner shell, and at least one of the inner shell, the insulating layer and the conductive layer includes a flame retardant.

Optionally, the connector further includes an outer shell paint the inner shell and including a flame retardant.

Optionally, a content of the flame retardant in the inner shell, the outer shell, the insulating layer or the conductive layer is not greater than 49%.

Optionally, the flame retardant contains one or more of bromine-based, nitrogen-based, red phosphorus and compounds thereof, halogens, non-halogens, tellurium compounds, borate, expandable graphite, antimony trioxide, magnesium hydroxide, aluminium hydroxide and silicon-based.

Optionally, an outer surface of the conductive layer is electrically connected with an inner surface of the inner shell.

Optionally, a cross-section shape of the electrical connection skeleton is one or more of a circle, an oval, a rectangle, a polygon, an A shape, a B shape, a D shape, an M shape, a N shape, an O shape, an S shape, an E shape, an F shape, a H shape, a K shape, an L shape, a T shape, a U shape, a V shape, a W shape, an X shape, a Y shape, a Z shape, a P shape, a half-arc shape, an arc shape, and a wave shape.

Optionally, the cross-sectional area of the electrical connection skeleton is 3.5mm² to 240mm^{2.}

Optionally, a material of the connection terminal contains copper or copper alloy, a material of the electrical connection skeleton includes aluminum or aluminum alloy, and the electrical connection skeleton is electrically connected with the connection terminal by welding or crimping.

Optionally, the electrical connection skeleton is a rigid body, and a tensile strength of the electrical connection skeleton is greater than 75MPa.

Optionally, a material of the conductive layer and of the inner shell is a conductive polymer material.

Optionally, the conductive polymer material is a conductive paint, and the conductive paint is a paint including conductive particles, and a material of the conductive particles includes one or more of metal, conductive ceramic, carbon-containing conductor, solid electrolyte, and mixed conductor.

Optionally, a volume proportion of the conductive particles in the conductive paint is 2.3% to 95%.

Optionally, the conductive paint is attached to the outer periphery of the insulating layer by brush coating or dip coating or spray coating.

Optionally, the conductive polymer material is a conductive plastic, the conductive plastic is a polymer material containing conductive particles, a material of the conductive particles contains one or more of a metal, a conductive ceramic, a carbon-containing conductor, a solid electrolyte, and a mixed conductor; a material of the polymer material contains one or more of tetraphenyl ethylene, polyvinyl chloride, polyethylene, polyamide, polytetrafluoroethylene, a tetrafluoroethylene-hexafluoropropylene copolymer, an ethylene-tetrafluoroethylene copolymer, polypropylene, polyvinylidene fluoride, polyurethane, poly(terephthalate acid)(i.e, polyethylene terephthalate), a polyurethane elastomer, a styrene block copolymer, perfluoroalkoxy alkane, chlorinated polyethylene, polyphenylene sulfide, polystyrene, cross-linked polyolefin, ethylene propylene rubber, an ethylene-vinyl acetate copolymer, chloroprene rubber, natural rubber, styrene butadiene rubber, nitrile butadiene rubber, silicone rubber, butadiene rubber, polyisoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate, and polyoxymethylene resin.

Optionally, a volume proportion of the conductive particles in the conductive plastic is 2.3% to 95%.

Optionally, a material of the metal includes one or more of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

Optionally, the carbon-containing conductor contains one or more of graphite silver, graphene silver, graphite powder, carbon nanotube material, and graphene material.

Optionally, the conductive plastic is formed at the outer periphery of the insulating layer by extrusion or injection molding or dip molding or blow molding or foaming or 3D printing.

Optionally, the inner shell is electrically connected with the conductive layer by conductive adhesive bonding or welding or screw bonding or crimping or clamping.

Optionally, an impedance between the conductive layer and the inner shell is less than 80mQ.

Optionally, a transfer impedance of the conductive layer is less than 100mS2.

Optionally, a transfer impedance of the inner shell is less than 100mS2.

Optionally, a shielding device is provided between the inner shell and the conductive layer, and the shielding device is electrically connected with the inner shell and the conductive layer respectively.

Optionally, an impedance between the conductive layer and the shielding device is less than 80mQ, and an impedance between the shielding device and the inner shell is less than 80mQ.

Optionally, a thickness of the conductive layer is 0.15mm to 3.8mm.

Optionally, a cross-section shape of the electrical connection skeleton is a polygon, and corners of the polygon are all chamfered or rounded.

Optionally, a partial region of the electrical connection skeleton is flexible.

Optionally, the electrical connection skeleton comprises at least one bending portion.

According to a second aspect of the present disclosure, a vehicle is provided and comprises the new shielded flame-retardant connector assembly according to any one of the above embodiments.

Advantageous effects of the present disclosure are:
1. Using an electrical connection skeleton to replace a multi-core copper cable, reducing a diameter of a cable and reducing a weight of the cable so that the cable may be mounted easily, reducing the friction between the cable and a vehicle shell, thus prolonging a service life of a connector assembly.
2. Adding the flame retardant to at least one of the inner and outer shells of the connector and the insulating layer and the conductive layer of the electrical connection skeleton, which ensures the flame retardant performance of the connector assembly.
3. A material of the conductive layer and the inner shell is a conductive polymer material, which ensures the conductive performance of the conductive layer. The process of extrusion or injection molding or dip molding or blow molding or foaming or 3D printing is adopted, which does not require more equipment and improves production efficiency.
4. A shielding device is provided between the inner shell and the conductive layer, the conductive layer and the shielding device may be fixed and electrically connected first, and the shielding device contacts with and is electrically connected with the inner shell during assembly, which improves the stability of the shielding connection and reduces the processing difficulty.

Other features and advantages of the present disclosure will become clear through the detailed description of the exemplary embodiments of the present disclosure with reference to the following drawings.

### BRIEF DESCRIPTION OF DRAWINGS

The accompanying drawings incorporated in and forming part of the specification show embodiments of the present disclosure and, together with description thereof, are used to explain the principle of the present disclosure.
FIG. 1 is a structural schematic diagram of a new shielded flame-retardant connector assembly in the present disclosure.
FIG. 2 is a sectional view of a new shielded flame-retardant connector assembly in a first embodiment of the present disclosure, in which a connection between a first connector and an electrical connection skeleton is shown.
FIG. 3 is a partial enlarged view at A in FIG. 2.
FIG. 4 is a sectional view of a new shielded flame-retardant connector assembly in a second embodiment of the present disclosure, in which a connection between a first connector and an electrical connection skeleton is shown.
FIG. 5 is a partial enlarged view at B in FIG. 4.

Signs in the drawings as follows:
1 - electrical connection skeleton; 2 - first connector; 3 - second connector; 4 - inner shell; 5 - connection terminal; 6 - shielding device; 7 - flame retardant; 8 - outer shell; 11 - insulating layer; 12 - conductive layer; 13 - outer insulating layer.

### DETAILED DESCRIPTION

Now, various exemplary embodiments of the present disclosure may be described in details with reference to the drawings. It should be noted that unless otherwise specified, relative arrangements, numerical expressions and numerical values of components and steps expounded in these embodiments do not limit the scope of the present disclosure.

The following description of at least one exemplary embodiment is actually illustrative only and in no way constitutes any limitation on the present disclosure and its application or use.

Technologies, methods and devices known to persons skilled in the relevant fields may not be discussed in details, but where appropriate, said technologies, methods and devices shall be considered as part of the Specification.

In all the examples shown and discussed herein, any specific value should be explained as only exemplary and not as a limitation. Therefore, other examples of the exemplary embodiments may have different values.

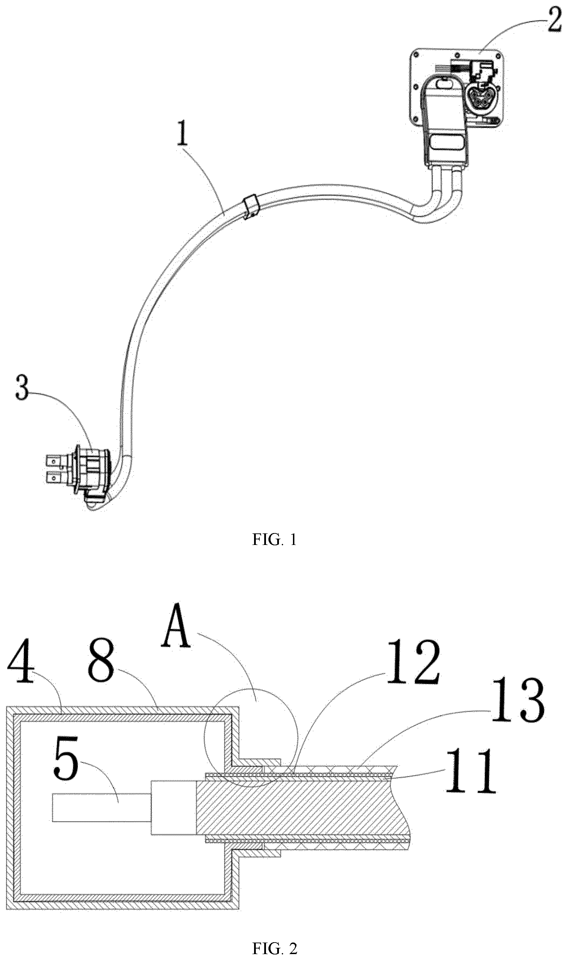

A new shielded flame-retardant connector assembly, as shown in FIG. 1, includes an electrical connection skeleton 1, and connectors connected to two ends of the electrical connection skeleton 1, each of the connectors includes a connection terminal 5, and an inner shell 4 which has a shielding effect, the two ends of the electrical connection skeleton 1 are electrically connected to connection terminals 5 respectively, an outer periphery of the electrical connection skeleton 1 is coated, from inside to outside, with an insulating layer 11 and a conductive layer 12, the conductive layer 12 is electrically connected to the inner shell 4, and at least one of the inner shell 4, the insulating layer 11 and the conductive layer 12 includes a flame retardant 7.

Exemplarily, the connector further includes an outer shell 8 coating the inner shell 4, the outer shell 8 including a flame retardant.

Exemplarily, a material of the conductive layer 12 and of the inner shell 4 is a conductive polymer material.

At present, for charging cables on most connector assemblies, a multi-core copper cable is used, it is large in weight and high in price, becoming an obstacle to popularization of the new energy vehicles. In addition, although a multi-core cable is softer and can be easily processed and wired, due to a too thick wire diameter and a larger weight, the cable will frequently rub against a vehicle shell during vehicle driving, causing a damage to an insulating layer of the cable, and resulting in high-voltage discharge, the vehicle is damaged in a mild circumstance, and a serious traffic accident may occur in a severe circumstance. Therefore, the present disclosure uses a cable form of the electrical connection skeleton 1 to replace the multi-core cable structure, so that the cable can be fixed on the vehicle shell, and will not rub against the vehicle shell as the vehicle vibrates, which extends a service life of a connector and reduces an accident rate. And, adding the flame retardant 7 to at least one of the inner shell 4 and the outer shell 8 of the connector, and the insulating layer 11 and the conductive layer 12 of the electrical connection skeleton 1 ensures the flame retardant performance of the connector assembly.

In order to reduce the influence of electromagnetic interference, a conductive cable is usually shielded from the electromagnetic interference by using a shielding net. At present, a commonly used shielding net is made by braiding a metal wire, and it is necessary to increase a shielding braiding machine in a cable production equipment, the equipment price is high and the occupied area is large, causing a price of a shielding cable of a connector to stay at a high level.

The electrical connection skeleton 1 is mostly used to transmit large currents in a vehicle, and a larger electromagnetic field may be generated when a current passes through. In order to prevent electromagnetic interference of the electromagnetic field generated by a large current on electrical appliances in the vehicle and affect the normal operation of other electrical appliances, it is thus necessary to perform electromagnetic shielding on the electromagnetic field generated by the large current.

Electromagnetic shielding mainly uses a shielding body to prevent the influence of a high-frequency electromagnetic field, so as to effectively control radiation transmission of electromagnetic waves from a certain region to another region. Basic principle is to use a conductor material with a low resistance value to make a shielding body, and to produce a shielding effect by utilizing electromagnetic waves by reflection a surface of the shielding body, by being absorbed inside the shielding body and by being worn out during transmission. In addition to that electromagnetic shielding needs to be performed on the electrical connection skeleton 1, at points where it connects with the first connector 2, the second connector 3 and the connection terminal 5 are also needs to be specially performed electromagnetic shielding. Two ends of the electrical connection skeleton 1 of the present disclosure are connected with the connection terminals 5 of the first connector 2 and the second connector 3 respectively, and these connection points are provided in the inner shell 4, and the inner shell 4 is electrically connected with the conductive layer 12 outside the electrical connection skeleton 1, thus achieving an effect of complete shielding. More specifically, referring to FIG. 2, the outer surface of the conductive layer 12 is electrically connected to the inner surface of the inner shell 4. More specifically, the insulating layer 11 is provided between the conductive layer 12 and the electrical connection skeleton 1, to prevent electrical connection between the two.

In the present disclosure, an electrical connection skeleton 1 is used to replace a multi-core copper cable, reducing a diameter of a cable and reducing a weight of the cable so that the cable may be mounted easily, reducing the friction between the cable and a vehicle shell, thus prolonging a service life of a connector assembly. Use of a conductive plastic or a conductive paint instead of braiding a shielding net reduces use of a shielding net braiding device, covers a small area, reduces the processing cost of cables, meanwhile reduces the production cost of the connector assembly. Adding the flame retardant 7 to at least one of the inner shell 4 the outer shell 8 of the connector, and the insulating layer 11 and the conductive layer 12 of the electrical connection skeleton 1 ensures the flame retardant performance of the connector assembly.

In some embodiments, a content of the flame retardant 7 in the inner shell 4, the outer shell 8, the insulating layer 11 or the conductive layer 12 is not greater than 49%. The flame retardant 7 is not only capable of being flame retardant, but also can prevent the emission of smoke, do not produce droppings and do not produce toxic gases. The flame retardant 7 exerts its flame retardant effect through several mechanisms, such as a heat-absorbing effect, a covering effect, an inhibiting chain reaction, and an asphyxiating effect of a non-flammable gas, etc. Most flame retardants 7 achieve a flame retardant purpose through the joint action of several mechanisms. The flame retardant 7 is an additive that can improve non-flammability, self-extinguishment or a smoke elimination property of a flammable or combustible material, and is one of the main additives for important fine chemical products and synthetic materials.

If a content of the flame retardant 7 added to a material is higher, flame retardance, self-extinguishment or a smoke elimination property of a finished product may be greatly improved. However, when the content of the flame retardant 7 is too large, it may affect mechanical performance or insulation performance or conductive performance of said components. In order to seek an appropriate proportion of the flame retardant 7, the inventor has conducted a relevant test, the test method is to pull the outer shell 8 and the inner shell 4 with different contents of the flame retardant 7 by using a tensile force of 500N, it is unqualified if damaged, and a conductivity of the insulating layer 11 with different flame retardant contents is tested, and it is unqualified if electrical conduction occurs, and a conductivity of the conductive layer 12 is tested, and it is unqualified if the conductivity is less than 99%, the results are shown in Table 1.

**Table 1 Influence of a content proportion of the flame retardant 7 on a strength of the outer shell 8, an insulating effect of the insulating layer 11, and a conductivity of the conductive layer 12**

| Content proportion (%) of the flame retardant 7 | | | | | | | | | |
|---|---|---|---|---|---|---|---|---|---|
| 45 | 46 | 47 | 48 | 49 | 50 | 51 | 52 | 53 | 55 |

| Whether the outer shell 8 and the inner shell 4 are damaged | | | | | | | | | |
|---|---|---|---|---|---|---|---|---|---|
| No | No | No | No | No | Yes | Yes | Yes | Yes | Yes |

| Conductivity (%) of the insulating layer 11 | | | | | | | | | |
|---|---|---|---|---|---|---|---|---|---|
| 0 | 0 | 0 | 0 | 0 | 0.1 | 0.5 | 0.8 | 1.2 | 1.5 |

| Conductivity (%) of the conductive layer 12 | | | | | | | | | |
|---|---|---|---|---|---|---|---|---|---|
| 99.6 | 99.5 | 99.3 | 99.2 | 99 | 98.9 | 98.8 | 98.7 | 98.6 | 98.5 |

It can be seen from Table 1 that when the proportion of the flame retardant in the inner shell 4, the outer shell 8, the insulating layer 11 or the conductive layer 12 is greater than 49%, the inner shell 4 and the outer shell 8 may be damaged under the tensile force of 500N, at the same time, the insulating layer 11 will have an electric conduction phenomena, which is a very dangerous situation, and the conductivity of the conductive layer 12 will drop below 99%, which is also unqualified, so the inventor exemplarily selects that the content of the flame retardant 7 in the inner shell 4, the outer shell 8, the insulating layer 11 or the conductive layer 12 is not greater than 49%.

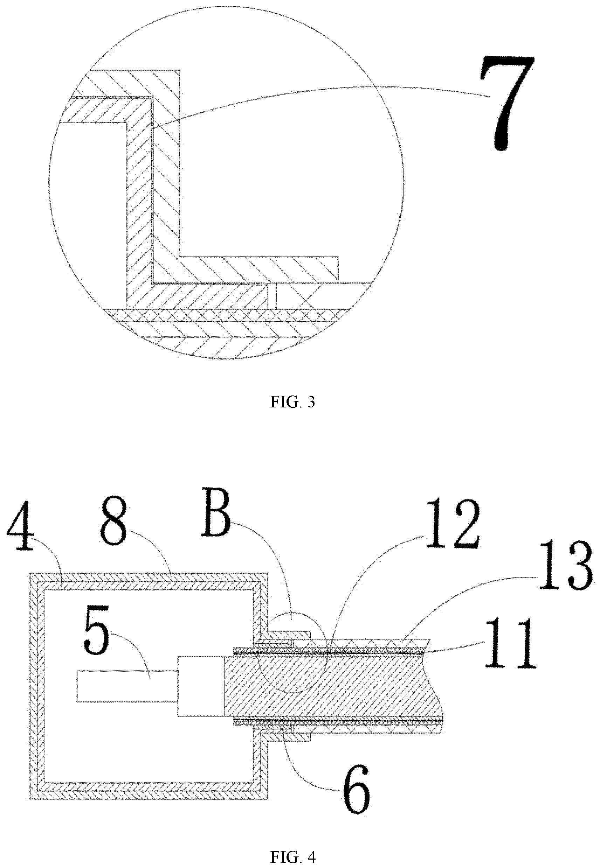

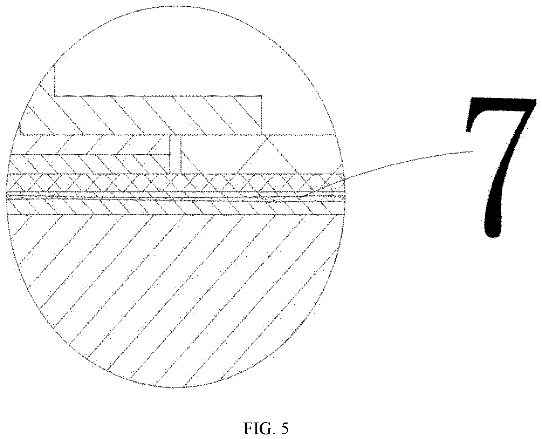

Specifically, in some embodiments, as shown in FIG. 2 and FIG. 3, the flame retardant 7 is added into the inner shell 4 of the first connector 2. In some other embodiments, as shown in FIG. 4 and FIG. 5, the flame retardant 7 is added into the insulating layer 11 of the electrical connection skeleton 1.

In some embodiments, the flame retardant 7 includes one or more of bromine-based, nitrogen-based, red phosphorus and compounds thereof, halogens, non-halogens, tellurium compounds, borate, expandable graphite, antimony trioxide, magnesium hydroxide, aluminium hydroxide and silicon-based. Thereby, using halogens flame retardants, especially bromine-based and nitrogen-based, makes the flame retardant efficiency of the connector assembly be high, the use amount of a flame retardant be small, and the relative cost be lower. Moreover, red phosphorus and compounds thereof as flame retardants can make most high polymers have good flame retardant performance at a lower use amount, and a stable treatment process, which can produce free radical flame retardancy in a gas phase and can form carbon layer flame retardancy in a condensed phase. Aluminum hydroxide and magnesium hydroxide flame retardants are the most common inorganic flame retardants, with advantages of being non-toxic, having good stability, not producing toxic gases at high temperatures and being capable of reducing the amount of smoke emitted at the time of plastic combustion, etc., and they are cheap and come from a wide range of sources.

In some embodiments, a cross-section shape of an outer contour of the electrical connection skeleton 1 is one or more of a circle, an oval, a rectangle, a polygon, an A shape, a B shape, a D shape, an M shape, a N shape, an O shape, an S shape, an E shape, an F shape, a H shape, a K shape, an L shape, a T shape, a U shape, a V shape, a W shape, an X shape, a Y shape, a Z shape, a P shape, a half-arc shape, an arc shape, and a wave shape.

Specifically, a part of the cross section of the electrical connection skeleton 1 may be of a circular structure and the other part thereof is of an oval structure, the electrical connection skeleton 1 is specifically a large-diameter rod-like conductor. When the wiring encounters a narrow space, the design of this structure can better adapt to a wiring path of a vehicle without changing an electrical energy transmission effect. When traditional two wires are used for vehicle body matching, often two different wires are employed and connected through welding or crimping methods. Therefore, the design of this scheme effectively reduces the cost, can better match a vehicle body contour, simplify a wiring process, reduce wiring consumables, and improve the installation efficiency.

In some embodiments, a cross-section shape of the electrical connection skeleton 1 is a polygon, and corners of the polygon are all chamfered or rounded.

In specific implementation, corners of the electrical connection skeleton 1 with a polygonal cross-section are all chamfered or rounded, which can facilitate connection between the electrical connection skeleton 1 and the connection terminal 5, so that when the two are welded or crimped, the connection between the electrical connection skeleton 1 and the connection terminal 5 is more firm, the contact area is larger, and a conduction current is better; prevent the contact area between the electrical connection skeleton 1 and the connection terminal 5 from being too small, resulting in too large resistance, causing heating and even a burning accident.

In some embodiments, a partial region of the electrical connection skeleton 1 is flexible. Flexible material may be a multi-core cable or a braided cable or a flexible flat cable formed by stacking a plurality of thin plates. Flexible material is easy to bend and have excellent conductive performance, and the thin sheet is softer and easy to deform and is suitable for serving as a flexible conductor, stacking a plurality of thin plates can ensure both flexibility and electrical conductivity efficiency. The electrical connection skeleton 1 is connected by a combination of rigid and flexible materials, which can better match with a vehicle body contour, save materials and space.

In some embodiments, the electrical connection skeleton 1 comprises at least one bending portion. Thereby, the bending portion may be set according to a specific demand in a wiring process, which is convenient for an operator to wire.

In some embodiments, the cross-sectional area of the electrical connection skeleton 1 is 3.5mm² to 240mm². The cross-sectional area of the electrical connection skeleton 1 decides a current that the electrical connection skeleton 1 can conduct. In general, the electrical connection skeleton 1 achieving signal conduction has a smaller current and the smaller cross-sectional area. For example, the minimum cross-sectional area of the electrical connection skeleton 1 for transmitting signals may reach 3.5mm², the electrical connection skeleton 1 achieving power supply conduction has a larger current and the larger cross-sectional area, such as a vehicle battery harness the maximum cross-sectional area of a conductor reaches 240mm².

In some embodiments, a material of the connection terminal 5 includes copper or copper alloy, and the electrical connection skeleton 1 is electrically connected with the connection terminal 5 by welding or crimping. Copper or a copper alloy have high conductivity and can be widely used in the field of electrical transmission. The electrical connection skeleton 1 is connected with the connection terminal 5 by welding, and the adopted welding mode includes one or more of resistance welding, friction welding, ultrasonic welding, arc welding, laser welding, electron beam welding, pressure diffusion welding and magnetic induction welding, concentrated heat energy or pressure is adopted to make a contact position of the connection terminal 5 and the electrical connection skeleton 1 produce fusion connection, the connection is firm using the welding mode, connection of dissimilar materials may be realized, and due to fusion of the contact position, a conductive effect is better.

The resistance welding mode refers to a method in which a strong current is used to pass through a contact point between an electrode and a workpiece, heat is generated by a contact resistance to achieve welding.

The friction welding mode refers to a method in which by using heat generated by friction of a workpiece contact face as a heat source, a workpiece is welded by generation of plastic deformation under a pressure.

The ultrasonic welding mode refers to that a high-frequency vibration wave is transmitted to surfaces of two objects to be welded, and in case of pressurization, the surfaces of the two objects are rubbed against each other to form fusion between molecular layers.

The arc welding mode refers to that using an electric arc as a heat source, a physical phenomenon of air discharge is used to convert electric energy into thermal energy and mechanical energy required for welding, so as to achieve the purpose of connecting metals, main methods include shielded metal arc welding, submerged arc welding, gas shielded welding and so on.

The laser welding mode refers to a high-efficient precision welding method using a laser beam with a high energy density as a heat source.

The friction welding mode refers to a method in which by using heat generated by friction of a workpiece contact face as a heat source, a workpiece is welded by generation of plastic deformation under a pressure.

The electron beam welding mode refers to that a welded face placed in vacuum or non-vacuum is bombarded using accelerated and focused electron beams, so that welding is achieved by melting a workpiece to be welded.

The pressure welding mode refers to a method in which a pressure is applied to a weldment to enable joint surfaces to contact closely to produce a certain plastic deformation, so as to complete welding.

The magnetic induction welding mode is that instantaneous high-speed collision is produced between two welded workpieces under the action of a strong pulsed magnetic field, and a surface of a material, under the action of a very high pressure wave, enables atoms of two materials to meet within an interatomic distance, thereby to form stable metallurgical bonding on an interface. It is one of solid state cold welding and can weld together conductive metals with similar or dissimilar properties.

In the crimping mode, crimping is a production process in which after the electrical connection skeleton 1 and the connection terminal 5 are assembled, a crimping machine is used to stamp the two into one piece. The advantage of the crimping is mass production, a product with stable quality can be manufactured in large amounts by using an automatic crimping machine.

In some embodiments, the electrical connection skeleton 1 is a rigid body, and a tensile strength of the electrical connection skeleton 1 is greater than 75MPa. The rigid body is an object whose shape and size do not change during movement and after being subjected to a force, and in which a relative position of each internal point does not change. An absolute rigid body does not actually exist, but is only an ideal model, because any object is more or less deformed after being subjected to a force, and if a degree of deformation is extremely small relative to a geometric size of the object itself, deformation can be ignored when studying object movement. Therefore, a deformation quantity produced by the electrical connection skeleton 1 made of a rigid body material is very little and can be ignored in the process of using, and the greater a tensile strength of the rigid body, the smaller the deformation quantity.

In order to verify the influence of the tensile strength of the electrical connection skeleton 1 on a torque of the electrical connection skeleton 1 that is bent in an XY direction and whether abnormal sound occurs during vibration, the inventor selects electrical connection skeleton 1 sample pieces with the same size specification and different tensile strengths to test the torque of the electrical connection skeleton 1 when it is bent, and abnormal sound during vibration.

Test method for a tensile force value of the electrical connection skeleton 1: use a universal tensile force testing machine to fix two ends of the electrical connection skeleton 1 on tensile fixtures of the universal tensile force testing machine respectively, stretch them at a speed of 50mm/min, record a tensile force value when they are pulled apart finally. In this embodiment, the tensile force value being greater than 2000N is a qualified value.

Torque test method for the electrical connection skeleton 1: use a torque tester to test a torque value of deformation of the electrical connection skeleton 1 during bending when the electrical connection skeleton 1 is bent by 90° at the same radius and at the same speed. In this embodiment, the torque value being less than 60 N•m is a qualified value.

For whether the electrical connection skeleton 1 has abnormal sound, a test method is to select electrical connection skeleton 1 sample pieces with the same size specification and different tensile strengths, assembly the first connectors 2 having the same specification and fix them on a vibration test bench, and during a vibration test, observe whether the electrical connection skeleton 1 has abnormal sound.

**Table 2: Influence of different tensile strengths on a torque value and abnormal sound of the electrical connection skeleton 1**

| Different tensile strengths (MPa) | | | | | | | | | | | |
|---|---|---|---|---|---|---|---|---|---|---|---|
| 50 | 55 | 60 | 63 | 66 | 68 | 70 | 72 | 75 | 78 | 80 | 82 |

| Tensile force values (N) when an electrical energy transmission body is snapped | | | | | | | | | | | |
|---|---|---|---|---|---|---|---|---|---|---|---|
| 1522 | 1587 | 1688 | 1709 | 1759 | 1815 | 1886 | 1979 | 2017 | 2036 | 2050 | 2077 |

| Torque values (N•m) of bending in a horizontal direction | | | | | | | | | | | |
|---|---|---|---|---|---|---|---|---|---|---|---|
| 6 | 8 | 9 | 18 | 27 | 40 | 52 | 58 | 61 | 65 | 68 | 70 |

| Whether the electrical connection skeleton 1 has abnormal sound | | | | | | | | | | | |
|---|---|---|---|---|---|---|---|---|---|---|---|
| Yes | Yes | Yes | Yes | Yes | Yes | Yes | Yes | No | No | No | No |

As can be seen from the above Table 2, when the tensile strength of the electrical connection skeleton 1 is less than 75MPa, the tensile force value of the electrical connection skeleton 1 when it is pulled apart is less than 2000N, at this moment, the strength of the electrical connection skeleton 1 per se is not high, and is easy to be pulled apart when it is subjected to a smaller external force, resulting in function failure of the electrical connection skeleton 1, thereby the purpose of electrical energy transmission cannot be achieved.

As can be seen from the above Table 2, when the tensile strength of the electrical connection skeleton 1 is greater than 75MPa, the torque value of the electrical connection skeleton 1 when it is bent by 90° is greater than 60N•m, at this moment, the torque value does not meet requirement on a qualified value, and when the torque value is greater than 60N•m, the electrical connection skeleton 1 is not easily bent. On the other hand, the tensile strength of the electrical connection skeleton 1 is larger, the electrical connection skeleton 1 is less likely to deform, so during the vibration test, the electrical connection skeleton 1 is less likely to vibrate with respect to the first connector 2 and the second connector 3 connected at both ends to produce abnormal sound. On the contrary, the tensile strength of the electrical connection skeleton 1 is smaller, the electrical connection skeleton 1 is more likely to deform, so during the vibration test, the electrical connection skeleton 1 is more likely to vibrate with respect to the first connector 2 and the second connector 3 connected at both ends to produce abnormal sound. As can be seen from the above Table 2, when the tensile strength of the electrical connection skeleton 1 is less than or equal to 75MPa, the electrical connection skeleton 1 may produce abnormal sound during the vibration test. Therefore, the inventor sets the tensile strength of the electrical connection skeleton 1 to be greater than 75MPa.

In some embodiments, the conductive polymer material is a conductive paint, and the conductive paint is a paint including conductive particles, and a material of the conductive particles includes one or more of a metal, a conductive ceramic, a carbon-containing conductor, a solid electrolyte, and a mixed conductor. The conductive paint is a functional paint which is mixed with conductive particles in a chemical solvent and can be sprayed on non-metallic materials to shield electromagnetic waves. With the advantages of room temperature curing and a strong adhesive force, a paint including conductive particles has conductive performance, i.e., has a shielding function, the biggest advantage lies in low cost, simple and practical, and widely applicable, the most used is a silver-based conductive paint which is also one of the earliest developed varieties.

Further, a volume proportion of the conductive particles in the conductive paint is 2.3% to 95%. If the volume proportion of the conductive particles is too small, the conductivity is insufficient and an ideal shielding effect cannot be achieved. Therefore, the inventor tests a conductive paint with different volume proportions of conductive particles. If the conductivity of the conductive paint is less than 99%, it is unqualified, the test result is shown in Table 3.

**Table 3: Influence of conductive paint with different volume proportions of conductive particles on conductivity of a conductive coating**

| Different volume proportions of conductive particles (%) | | | | | | | | | | | | |
|---|---|---|---|---|---|---|---|---|---|---|---|---|
| 2 | 2.3 | 5 | 10 | 20 | 30 | 40 | 50 | 60 | 70 | 80 | 95 | 97 |

| Conductivity of a conductive coating | | | | | | | | | | | | |
|---|---|---|---|---|---|---|---|---|---|---|---|---|
| 98.9 | 99 | 99.1 | 99.1 | 99.2 | 99.2 | 99.3 | 99.3 | 99.4 | 99.5 | 99.5 | 99.6 | 99.6 |

As can be known from Table 3, when the proportion of conductive particles in the conductive paint is less than 45%, the conductivity of the conductive coating is less than 99%, which cannot meet a need. After the proportion of conductive particles in the conductive paint is greater than 95%, the conductivity does not increase, and a required process requirement is becoming higher and higher. Therefore, the inventor exemplarily selects that a volume proportion of the conductive particles in the conductive paint is 2.3% to 95%.

In some embodiments, the conductive polymer material is a conductive plastic, the conductive plastic is a polymer material including conductive particles, a material of the conductive particles includes one or more of a metal, a conductive ceramic, a carbon-containing conductor, a solid electrolyte, and a mixed conductor; a material of the polymer material includes one or more of tetraphenyl ethylene, polyvinyl chloride, polyethylene, polyamide, polytetrafluoroethylene, a tetrafluoroethylene-hexafluoropropylene copolymer, an ethylene-tetrafluoroethylene copolymer, polypropylene, polyvinylidene fluoride, polyurethane, poly(terephthalate acid)(i.e, polyethylene terephthalate), a polyurethane elastomer, a styrene block copolymer, perfluoroalkoxy alkane, chlorinated polyethylene, polyphenylene sulfide, polystyrene, cross-linked polyolefin, ethylene propylene rubber, an ethylene-vinyl acetate copolymer, chloroprene rubber, natural rubber, styrene butadiene rubber, nitrile butadiene rubber, silicone rubber, butadiene rubber, polyisoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate, and polyoxymethylene resin. Conductive plastic including different particles may be selected based on a need.

Further, a volume proportion of the conductive particles in the conductive plastic is 2.3% to 95%. If the volume proportion of the conductive particles is too small, the conductivity of the conductive plastic is insufficient and an ideal shielding effect cannot be achieved. Therefore, the inventor tests a conductive plastic with different volume proportions of conductive particles. If the conductivity of the conductive plastic is less than 99%, it is unqualified, the test result is shown in Table 4.

**Table 4: Influence of conductive plastic with different volume proportions of conductive particles on conductivity of a conductive coating**

| Different volume proportions (%) of conductive particles | | | | | | | | | | | | |
|---|---|---|---|---|---|---|---|---|---|---|---|---|
| 2 | 2.3 | 5 | 10 | 20 | 30 | 40 | 50 | 60 | 70 | 80 | 95 | 97 |

| Conductivity of a conductive coating (%) | | | | | | | | | | | | |
|---|---|---|---|---|---|---|---|---|---|---|---|---|
| 98.9 | 99.1 | 99.1 | 99.2 | 99.2 | 99.2 | 99.3 | 99.3 | 99.4 | 99.4 | 99.5 | 99.6 | 99.6 |

As can be known from Table 4, when the proportion of conductive plastic in the conductive paint is less than 2.3%, the conductivity of the conductive coating is less than 99%, which cannot meet a need. After the proportion of conductive particles in the conductive plastic is greater than 95%, the conductivity does not increase, and a required process is becoming higher and higher. Therefore, the inventor exemplarily selects that a volume proportion of the conductive plastic in the conductive paint is 2.3% to 95%.

In some embodiments, a material of the metal includes one or more of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy. In order to demonstrate the influence of different metal materials on the conductivity of a conductive paint and of a conductive plastic, the inventor adopts the conductive plastic as an example to test, uses metal particles with the same specification size and different materials to make conductive plastic sample pieces to test the conductivity of conductive plastic respectively, an experimental result is shown in the following Table 5. In this embodiment, the conductivity of the conductive plastic greater than 99% is an ideal value.

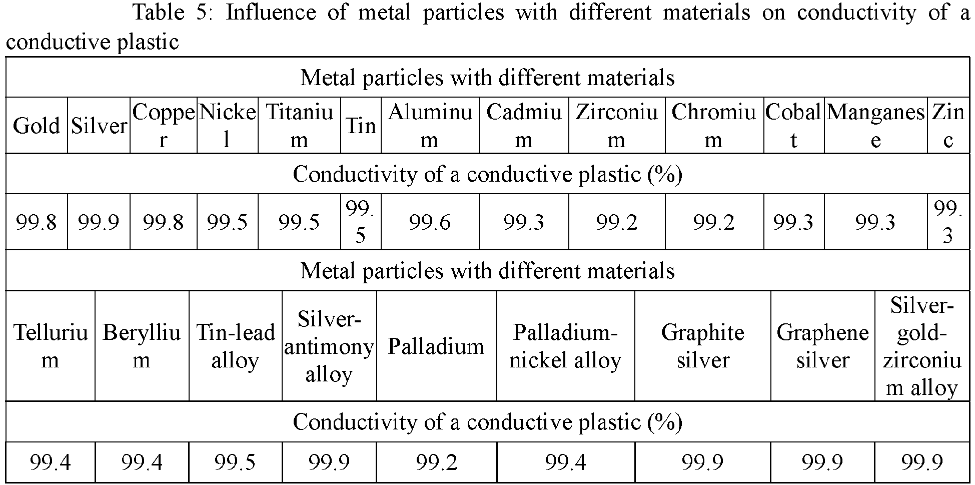

As can be seen from the above Table 5, conductivities of conductive plastics made of selected different metal particles are all within an ideal value range. In addition, phosphorus is a non-metallic material and cannot be directly used as a material for a conductive layer, but can be added to other metals to form an alloy to improve conductive and mechanical performance of metals per se. Therefore, the inventor sets a material of a metal particle to include a material of the metal, including one or more of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

In some embodiments, the carbon-containing conductor contains one or more of graphite silver, graphene silver, graphite powder, carbon nanotube material, and graphene material. Graphite powder is a mineral powder, whose main component is carbon being soft and black gray; the graphite powder is a good non-metallic conductive material. Carbon nanotube has good conductive performance, and because a structure of the carbon nanotube is the same as a lamellar structure of graphite, it has good electrical performance. Graphite powder, graphite silver and graphene silver even have extremely high electrical performance, and a carbon-containing conductor including these three materials has high conductivity and good shielding performance, which can well achieve electromagnetic shielding of the electrical connection skeleton 1.

In some embodiments, the conductive paint is attached to the outer periphery of the insulating layer 11 by brush coating or dip coating or spray coating. Brush coating is a method of brushing a product surface by using various paint brushes and flat brushes to dip paints and forming a uniform coating, and is the earliest applied and most common coating method. Advantages of the brush coating method are that there is almost no need for equipment fixture investment, coating materials are saved, and generally a covering process is not required. Dip coating is to immerse a coated object all in a tank including paints, after a short period of time, and take it out from the tank, and re-flow excess paint liquid back into the tank. The dip coating is characterized by high production efficiency, simple operation and less paint loss.

In some embodiments, the conductive plastic is formed at the outer periphery of the insulating layer 11 by extrusion or injection molding or dip molding or blow molding or foaming or 3D printing.

Extrusion process, also called extrusion molding in plastic processing, is an efficient, continuous and low-cost molding processing method, and is an earlier technology in polymer material processing. Extrusion molding is a molding processing method in the field of polymer processing, in which production varieties are the most, changes are the most, the productivity is high, the adaptability is strong, the use is wide, and the output accounts for the largest proportion. In a layout of production equipment, a metal wire braiding machine with a larger occupied area can no longer be used, three extruders of the insulating layer 11, the conductive layer 12 and the outer insulating layer 13 can be placed side by side, and the electrical connection skeleton 1 passes through each extruder and successively covers the insulating layer 11, the conductive layer 12 and the outer insulating layer 13. In order to make the outer insulating layer 13 be easily detached from the conductive layer 12, a lubricant may further be added between the conductive layer 12 and the outer insulating layer 13.

Injection molding process refers to a technological process of making a semi-finished product having a certain shape by using a molten raw material and via operations such as pressurizing, injecting, cooling and removing.

Dip molding process refers to a technological process in which after a workpiece is electrically heated, a certain temperature is reached, and then the workpiece is dipped into a dipping liquid, so that the dipping liquid is solidified on the workpiece.

Blow molding process is to extrude a tubular parison with an extruder, put it into a mold while it is still hot, and blow it up by introducing compressed air to make it reach a mold cavity shape, and obtain a product after cooling and shaping. Advantages are: suitable for a variety of plastics, capable of producing large products, high production efficiency, uniform parison temperature and less equipment investment, etc.

Foaming process refers to formation of a honeycomb or porous structure in a foaming molding process or a foamed polymer material through addition and reaction of a physical blowing agent or chemical blowing agent. Basic steps of the foam forming are bubble nucleate formation, bubble nucleate growth or expansion, and bubble nucleate stabilization. Under given temperature and pressure conditions, the solubility of a gas decreases, so that a saturation state is reached, excess gas is removed and bubbles are formed, thus achieving nucleation.

3D printing process is one of rapid prototyping technologies, also called additive manufacturing, and is a technology in which based on a digital model file, an object is constructed by printing layer by layer, by using an adhesive material such as powdered metal or plastic.

In a layout of production equipment, a metal wire braiding machine with a larger occupied area can no longer be used, three extruders of the insulating layer 11, the conductive layer 12 and the outer insulating layer 13 can be placed side by side, and the electrical connection skeleton 1 passes through each extruder and is successively coverd with the insulating layer 11, the conductive layer 12 and the outer insulation layer 13. In order to make the outer insulating layer 13 be easily detached from the conductive layer 12, a lubricant may further be added between the conductive layer 12 and the outer insulating layer 13.

In some embodiments, the inner shell 4 is electrically connected with the conductive layer 12 by conductive adhesive bonding or welding or screw bonding or crimping or clamping. Conductive adhesive is a tackiness agent with certain conductivity after curing or drying. It can connect multiple conductive materials together to form an electrical path between the connected materials. In the electronic industry, the conductive adhesive has become an indispensable new material. Through connection by adhesion using the conductive adhesive, conductivity between the inner shell 4 and the conductive layer 12 can be ensured, playing a better shielding effect. Welding, such as hot pressure welding, is to perform pressure welding on welding zones of the inner shell 4 and of the conductive layer 12. Its principle is to make a welding zone product plastic deformation through heating and pressure addition, so that a gravitational range of atoms is reached between contact surfaces of the two, thereby an attractive force is generated between atoms, to achieve the purpose of bonding.

In some embodiments, an impedance between the conductive layer 12 and the inner shell 4 is less than 80mQ.

The impedance between the conductive layer 12 and the inner shell 4 should be as small as possible, so that a current generated by the inner shell 4 may flow back to an energy source or ground position without hindrance. If the impedance between the conductive layer 12 and the inner shell 4 is larger, a larger current may be generated between the conductive layer 12 and the inner shell 4, resulting in a larger radiation at a cable connection.

In order to verify the influence of an impedance value between the conductive layer 12 and the inner shell 4 on a shielding effect of a shielded cable connection structure, the inventor selects the electrical connection skeleton 1, connectors and the connection terminal 5 of the same specification, selects different impedances between the conductive layer 12 and the inner shell 4, and makes a series of samples to test the shielding effect respectively. The experimental result is shown in the following Table 6. In this embodiment, the shielding performance value greater than 40dB is an ideal value.

The shielding performance value test method is: a test instrument outputs a signal value to the electrical connection skeleton 1 (the value is a test value 2), and a detection device is set outside the electrical connection skeleton 1, and the detection device detects a signal value (the value is a test value 1). Shielding performance value= test value 2 - test value 1.

**Table 6: Influence of an impedance between the conductive layer 12 and the inner shell 4 on shielding performance**

| Test parameters | Impedance between the conductive layer 12 and the inner shell 4 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 73 | 71 | 66 | 61 | 57 | 52 | 47 | 43 | 33 | 28 |

As can be seen from Table 6, when the impedance value between the conductive layer 12 and the inner shell 4 is greater than 80mQ, the shielding performance value is less than 40dB, which does not meet the requirement on the ideal value. When the impedance value between the conductive layer 12 and the outer insulating layer 13 is less than 80mQ, the shielding performance values all meet the requirement on the ideal value, and a trend is getting better and better. Therefore, the inventor sets an impedance between the conductive layer 12 and the inner shell 4 to be less than 80mQ.

In some embodiments, a transfer impedance of the conductive layer 12 is less than 100mS2. A shielding material usually uses a transfer impedance to characterize a shielding effect of the conductive layer 12, and the smaller the transfer impedance, the better the shielding effect. The transfer impedance of the conductive layer 12 is defined as a ratio of a difference-mode voltage U induced by a unit length shielding body to a current Is passing through a surface of the shielding body, i.e.:

Z_{T}=U/I_{S}, thus it can be understood that the transfer impedance of the conductive layer 12 converts a current of the conductive layer 12 into differential mode interference. The smaller the transfer impedance, the better, that is, reducing differential mode interference conversion may obtain better shielding performance.

In order to verify the influence of the conductive layer 12 with different transfer impedance values on a shielding effect of a shielded cable connection structure, the inventor selects the electrical connection skeleton 1, connectors and the connection terminal 5 of the same specification, adopts the conductive layer 12 with different transfer impedance values, and makes a series of samples to test the shielding effect respectively. The experimental result is shown in the following Table 7. In this embodiment, the shielding performance value greater than 40dB is an ideal value.

The shielding performance value test method is: a test instrument outputs a signal value to the electrical connection skeleton 1 (the value is a test value 2), and a detection device is set outside the electrical connection skeleton 1, and the detection device detects a signal value (the value is a test value 1). Shielding performance value= test value 2 - test value 1.

**Table 7: Influence of a transfer impedance of the conductive layer 12 on shielding performance**

| Test parameters | Transfer impedance of the conductive layer 12 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 71 | 66 | 63 | 58 | 53 | 46 | 42 | 30 | 27 |

As can be seen from Table 7, when the transfer impedance value of the conductive layer 12 is greater than 100mQ, the shielding performance value of the conductive layer 12 is less than 40dB, which does not meet the requirement on the ideal value. When the transfer impedance value of the conductive layer 12 is less than 100mΩ, the shielding performance values of the conductive layer 12 all meet the requirement on the ideal value, and a trend is getting better and better. Therefore, the inventor sets the transfer impedance value of the conductive layer 12 to be less than 100mS2.

In some embodiments, a transfer impedance of the inner shell 4 is less than 100mS2.

In order to verify the influence of the inner shell 4 with different transfer impedance values on a shielding effect, the inventor selects the electrical connection skeleton 1, connectors and the connection terminal 5 of the same specification, adopts the inner shell 4 with different transfer impedance values, and makes a series of samples to test the shielding effect respectively. The experimental result is shown in the following Table 8. In this embodiment, the shielding performance value greater than 40dB is an ideal value.

The shielding performance value test method is: a test instrument outputs a signal value to the electrical connection skeleton 1 (the value is a test value 2), and a detection device is set outside the inner shell 4, and the detection device detects a signal value (the value is a test value 1). Shielding performance value= test value 2 - test value 1.

**Table 8: Influence of a transfer impedance of the inner shell 4 on shielding performance**

| Test parameters | Transfer impedance of the inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 72 | 65 | 63 | 59 | 54 | 45 | 42 | 30 | 27 |

As can be seen from Table 8, when the transfer impedance value of the inner shell 4 is greater than 100mQ, the shielding performance value of the inner shell 4 is less than 40dB, which does not meet the requirement on the ideal value. When the transfer impedance value of the inner shell 4 is less than 100mQ, the shielding performance values of the inner shell 4 all meet the requirement on the ideal value, and a trend is getting better and better. Therefore, the inventor sets the transfer impedance value of the inner shell 4 to be less than 100mS2.

In some embodiments, as shown in FIG. 4 and FIG. 5, a shielding device 6 is provided between the inner shell 4 and the conductive layer 12, and the shielding device 6 is electrically connected to the inner shell 4 and the conductive layer 12 respectively. Thereby, the conductive layer 12 and the shielding device 6 may be fixed and electrically connected first, and the shielding device 6 contacts with and is electrically connected with the inner shell 4 during assembly, which improves the stability of the shielding connection and reduces the processing difficulty.

Further, in some embodiments, the impedance between the conductive layer 12 and the shielding device 6 is less than 80mQ, and the impedance between the shielding device 6 and the inner shell 4 is less than 80mQ.

In order to verify the influence of an impedance value between the shielding device 6 and the conductive layer 12 on a shielding effect, the inventor selects the electrical connection skeleton 1, connectors, the inner shell 4 and the connection terminal 5 of the same specification, selects different impedances between the shielding device 6 and the conductive layer 12, and makes a series of samples to test the shielding effect respectively. The experimental result is shown in the following Table 9. In this embodiment, the shielding performance value greater than 40dB is an ideal value.

The shielding performance value test method is: a test instrument outputs a signal value to the electrical connection skeleton 1 (the value is a test value 2), and a detection device is set at the conductive layer 12 formed by conductive particles, and the detection device detects a signal value (the value is a test value 1). Shielding performance value= test value 2 - test value 1.

**Table 9: Influence of an impedance between a shielding connection device and the conductive particles on shielding performance**

| Test parameters | Impedance between a shielding connection device and the conductive particles (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 75 | 74 | 69 | 65 | 61 | 57 | 51 | 46 | 43 | 35 | 28 |

As can be seen from Table 9, when the impedance value between the shielding device 6 and the conductive layer 12 is greater than 80mQ, the shielding performance value is less than 40dB, which does not meet the requirement on the ideal value. When the impedance value between the shielding device 6 and the conductive layer 12 is less than 80mQ, the shielding performance values all meet the requirement on the ideal value, and a trend is getting better and better. Therefore, the inventor sets an impedance between the shielding device 6 and the conductive layer 12 to be less than 80mQ.

By using a similar method, the inventor exemplarily selects that an impedance between the shielding device 6 and the inner shell 4 is less than 80mQ.

In some embodiments, a thickness of the conductive layer 12 is 0.15mm to 3.8mm.

If the thickness of the conductive layer 12 is too small, the conductivity is insufficient, and the shielding effect cannot meet the requirement. If the thickness of conductive layer 12 is too large, materials will be wasted and a weight of a vehicle body is increased. In order to demonstrate the influence of the conductive layer 12 with different thicknesses on the conductivity of conductive layer 12, the inventor uses materials with same or different thicknesses and same texture to make samples of the conductive layer 12 to text the conductivity respectively, the experimental result is shown in Table 10. In this embodiment, the conductivity of the conductive layer 12 is greater than 99%, which is an ideal value.

**Table 10: Influence of a thickness of the conductive layer 12 on conductivity**

| Thickness of the conductive layer (mm) | | | | | | | | | | | | | | |
|---|---|---|---|---|---|---|---|---|---|---|---|---|---|---|
| 0.14 | 0.15 | 0.16 | 0.18 | 0.2 | 0.4 | 0.8 | 1.1 | 2.5 | 2.0 | 2.6 | 3.1 | 3.5 | 3.8 | 4.0 |

| Conductivity (%) | | | | | | | | | | | | | | |
|---|---|---|---|---|---|---|---|---|---|---|---|---|---|---|
| 98.9 | 99 | 99 | 99.1 | 99.1 | 99.2 | 99.3 | 99.4 | 99.5 | 99.6 | 99.7 | 99.8 | 99.8 | 99.9 | 99.9 |

As can be seen from Table 10, when the thickness of the conductive layer 12 is less than 0.15mm, the conductivity is less than 99%, which is unqualified. After the thickness of the conductive layer 12 is greater than 3.8mm, the conductivity does not increase. And a thicker conductive layer 12 will increase the cost and a vehicle body weight, so the inventor exemplarily selects that the thickness of the conductive layer 12 is 0.15mm to 3.8mm.

The present disclosure discloses a vehicle, comprising a new shielded flame-retardant connector assembly according to any one of the above embodiments.

Although some specific embodiments of the present disclosure have been detailed through examples, persons skilled in the art should understand that the above examples are intended only for illustration but are not for limiting the scope of the present disclosure. Persons skilled in the art should understand that the above embodiments may be modified without deviating from the scope and spirit of the present disclosure. The scope of the present disclosure is defined by the attached claims.

## Claims

1. A new shielded flame-retardant connector assembly, comprising an electrical connection skeleton, and connectors connected to two ends of the electrical connection skeleton, wherein each of the connectors comprises a connection terminal, and an inner shell which has a shielding effect, the two ends of the electrical connection skeleton are electrically connected to connection terminals respectively, an outer periphery of the electrical connection skeleton is coated, from inside to outside, with an insulating layer and a conductive layer, the conductive layer is electrically connected to the inner shell, and at least one of the inner shell, the insulating layer and the conductive layer comprises a flame retardant.

2. The new shielded flame-retardant connector assembly according to claim 1, wherein the connector further comprises an outer shell coating the inner shell and comprising a flame retardant.

3. The new shielded flame-retardant connector assembly according to claim 2, wherein a content of the flame retardant in the inner shell, the outer shell, the insulating layer or the conductive layer is not greater than 49%.

4. The new shielded flame-retardant connector assembly according to claim 1, wherein the flame retardant comprises one or more of bromine-based, nitrogen-based, red phosphorus and compounds thereof, halogens, non-halogen, tellurium compounds, borates, expandable graphite, antimony trioxide, magnesium hydroxide, aluminium hydroxide and silicon-based.

5. The new shielded flame-retardant connector assembly according to claim 1, wherein an outer surface of the conductive layer is electrically connected with an inner surface of the inner shell.

6. The new shielded flame-retardant connector assembly according to claim 1, wherein a cross-section shape of the electrical connection skeleton is one or more of a circle, an oval, a rectangle, a polygon, an A shape, a B shape, a D shape, an M shape, a N shape, an O shape, an S shape, an E shape, an F shape, a H shape, a K shape, an L shape, a T shape, a U shape, a V shape, a W shape, an X shape, a Y shape, a Z shape, a P shape, a half-arc shape, an arc shape, and a wave shape.

7. The new shielded flame-retardant connector assembly according to claim 1, wherein the cross-sectional area of the electrical connection skeleton is 3.5mm²-240mm².

8. The new shielded flame-retardant connector assembly according to claim 1, wherein a material of the connecting terminal comprises copper or copper alloy, a material of the electrical connection skeleton comprises aluminum or aluminum alloy, and the electrical connection skeleton is electrically connected with the connection terminal by welding or crimping.

9. The new shielded flame-retardant connector assembly according to claim 1, wherein the electrical connection skeleton is a rigid body, and a tensile strength of the electrical connection skeleton is greater than 75MPa.

10. The new shielded flame-retardant connector assembly according to claim 1, wherein a material of the conductive layer and of the inner shell is a conductive polymer material.

11. The new shielded flame-retardant connector assembly according to claim 10, wherein the conductive polymer material is a conductive paint, and the conductive paint is a paint comprising conductive particles, and a material of the conductive particles comprises one or more of a metal, a conductive ceramic, a carbon-containing conductor, a solid electrolyte, and a mixed conductor.

12. The new shielded flame-retardant connector assembly according to claim 11, wherein a volume proportion of the conductive particles in the conductive paint is 2.3% to 95%.

13. The new shielded flame-retardant connector assembly according to claim 11, wherein the conductive paint is attached to the outer periphery of the insulating layer by brush coating or dip coating or spray coating.

14. The new shielded flame-retardant connector assembly according to claim 10, wherein the conductive polymer material is a conductive plastic, the conductive plastic is a polymer material comprising conductive particles, a material of the conductive particles comprises one or more of a metal, a conductive ceramic, a carbon-containing conductor, a solid electrolyte, and a mixed conductor; a material of the polymer material comprises one or more of tetraphenyl ethylene, polyvinyl chloride, polyethylene, polyamide, polytetrafluoroethylene, a tetrafluoroethylene-hexafluoropropylene copolymer, an ethylene-tetrafluoroethylene copolymer, polypropylene, polyvinylidene fluoride, polyurethane, poly(terephthalate acid), a polyurethane elastomer, a styrene block copolymer, perfluoroalkoxy alkane, chlorinated polyethylene, polyphenylene sulfide, polystyrene, cross-linked polyolefin, ethylene propylene rubber, an ethylene-vinyl acetate copolymer, chloroprene rubber, natural rubber, styrene butadiene rubber, nitrile butadiene rubber, silicone rubber, butadiene rubber, polyisoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, a styrene-acrylonitrile copolymer, polymethacrylate, and polyoxymethylene resin.

15. The new shielded flame-retardant connector assembly according to claim 14, wherein a volume proportion of the conductive particles in the conductive plastic is 2.3% to 95%.

16. The new shielded flame-retardant connector assembly according to claim 14, wherein a material of the metal comprises one or more of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

17. The new shielded flame-retardant connector assembly according to claim 14, wherein the carbon-containing conductor comprises one or more of graphite silver, graphene silver, graphite powder, carbon nanotube material, and graphene material.

18. The new shielded flame-retardant connector assembly according to claim 14, wherein the conductive plastic is formed at the outer periphery of the insulating layer by extrusion or injection molding or dip molding or blow molding or foaming or 3D printing processes.

19. The new shielded flame-retardant connector assembly according to claim 1, wherein the inner shell is electrically connected with the conductive layer by conductive adhesive bonding or welding or screw bonding or crimping or clamping.

20. The new shielded flame-retardant connector assembly according to claim 1, wherein an impedance between the conductive layer and the inner shell is less than 80mQ.

21. The new shielded flame-retardant connector assembly according to claim 1, wherein a transfer impedance of the conductive layer is less than 100mS2.

22. The new shielded flame-retardant connector assembly according to claim 1, wherein a transfer impedance of the inner shell is less than 100mS2.

23. The new shielded flame-retardant connector assembly according to claim 1, wherein a shielding device is provided between the inner shell and the conductive layer, and the shielding device is electrically connected with the inner shell and the conductive layer respectively.

24. The new shielded flame-retardant connector assembly according to claim 23, wherein an impedance between the conductive layer and the shielding device is less than 80mQ, and an impedance between the shielding device and the inner shell is less than 80mQ.

25. The new shielded flame-retardant connector assembly according to claim 1, wherein a thickness of the conductive layer is 0.15mm to 3.8mm.

26. The new shielded flame-retardant connector assembly according to claim 1, wherein a cross-section shape of the electrical connection skeleton is a polygon, and corners of the polygon are all chamfered or rounded.

27. The new shielded flame-retardant connector assembly according to claim 1, wherein a partial region of the electrical connection skeleton is flexible.

28. The new shielded flame-retardant connector assembly according to claim 1, wherein the electrical connection skeleton comprises at least one bending portion.

29. A vehicle, comprising the new shielded flame-retardant connector assembly according to any one of claims 1 to 28.
